# EUROPEAN PATENT APPLICATION

(11) **EP 4 414 117 A1**
(43) Date of publication of application: **14.08.2024**
(21) Application number: 24155006.0
(22) Date of filing: 31.01.2024
(51) Int. Cl.: B23K 26/03, B23K 26/035, B23K 26/21, B23K 26/22, H01M 4/70, H01M 50/503, H01M 50/51, H01M 50/516, H01M 50/528, H01M 50/531

(54) **BUS BAR FOR BATTERY PACK AND BATTERY PACK INCLUDING THE SAME**

(30) Priority: 08.02.2023 CN 202310133800
(71) Applicant: Techtronic Cordless GP, Anderson, SC 29621 (US)
(72) Inventor: LIU, Ya Bin, Dongguan City (CN); ZHAO, Jiang, Dongguan City (CN)
(74) Representative: Meissner Bolte Partnerschaft mbB

(57) **Abstract**

The present invention discloses a collector plate for a battery pack, the collector plate comprising a welding part to be welded to an electrode terminal of a battery unit, wherein the welding part comprises a first side configured to come into contact with the electrode terminal during welding; and a second side opposite to the first side and provided with a positioning reference mark, which is configured as a positioning reference point for welding. By providing a positioning reference mark aligned with an electrode terminal of the corresponding battery unit at the welding part of the collector plate, the positioning accuracy of welding and the quality of the welding of a collector plate and an electrode terminal of a battery unit may be greatly improved, which improves the safety, accuracy, and efficiency of welding operations and avoids potential safety incidents in the circuit of the battery pack, thus increasing the product acceptance rate to reduce the material cost, labour cost, time cost, and total product cost.

## Description

### Technical Field

The present invention relates to the field of battery packs, and in particular to a collector plate for a battery pack and a battery pack comprising the collector plate.

### Background Art

Thanks to the development of battery technology, great convenience has been provided for electric tools, including the ability to install rechargeable secondary battery packs into electric tools, thereby eliminating the need for using wires.

Battery units commonly used in battery packs are secondary batteries, especially lithium-ion secondary batteries, in which doped and undoped lithium ions are typically used. A plurality of battery units are enclosed within a housing to form a battery pack. Battery packs comprising battery units such as lithium-ion secondary batteries are already widely used in electronic devices (such as personal computers and mobile phones), electric vehicles, electric tools, etc., especially handheld electric tools.

A battery pack comprises a plurality of battery units and is electrically connected to an electric tool to provide power to the tool. A battery pack further comprises a collector plate, which is electrically connected to the battery units and comprises welding parts, and the collector plate is welded to the terminals of the battery units through its welding parts to establish an electrical connection. Since a battery pack typically comprises a plurality of battery units with predetermined electrical connections therebetween, to weld a collector plate to a terminal of a battery unit, it is necessary to align the welding parts of the collector plate with the terminals of the battery unit to achieve accurate positioning therebetween and form a good welding weight therebetween; during and/or after welding, it is also necessary to inspect the welding quality to ensure a good electrical connection therebetween, thereby ensuring that the current path inside the entire battery pack is unobstructed and safe.

Generally, a positioning column is arranged on the battery pack housing, and a positioning hole is correspondingly arranged on the collector plate; during the welding process, the collector plate is placed on the battery unit, the positioning hole of the collector plate is aligned with the positioning column, and the positioning column is inserted into the positioning hole to fix it in place, thereby fixedly connecting the collector plate to the battery pack housing. Since a collector plate and the welding parts of the collector plate are designed and manufactured according to the positions, quantity, shapes, and arrangements of the battery units and terminals thereof, once a collector plate is installed on a battery unit, the welding parts of the collector plate are naturally aligned with the terminals of the battery unit on a one-to-one basis. Alternatively, other auxiliary installation components may also be used to align the welding parts of a collector plate with the terminals of a battery unit, wherein, for example, protrusions and grooves that fit each other may be arranged on the collector plate and the battery pack housing, respectively, so that when the collector plate is installed on the battery pack and battery unit, the welding parts of the collector plate are automatically aligned with the terminals of the battery unit.

However, during the welding process after a collector plate is installed on a battery unit, due to the lack of positioning marks for welding reference on the collector plate, it is not possible to accurately perform the welding at the position where the collector plate is aligned with the terminal (in other words, the starting point or reference point for welding cannot be found), so a welding spot or weld seam cannot be accurately formed at the position corresponding to the terminal on the collector plate. In this case, a weld seam may form at a position on the collector plate that is not aligned with the terminal, so the welds may be faulty, insufficient, or misaligned between the collector plate and the terminal of the battery unit, or even no welds are formed therebetween, which will result in a failure to establish correct and effective electrical connections between the battery units of the battery pack, wherein, in mild cases, it may result in the inability to supply power to the electric tool due to the failure to form a current path inside the battery pack, and, in severe cases, it can cause a short circuit inside the battery pack, and even heating and explosion of the battery units, resulting in safety incidents. In addition, during an inspection or measurement of the welding quality during and/or after the welding process, it cannot be guaranteed in the first place that a weld seam is formed at an accurate position, so such a subsequent inspection or measurement itself would also be inaccurate or substantially meaningless.

If a weld seam fails to form at the accurate position on the collector plate, it may be necessary to perform rewelding. For example, it is necessary to perform rewelding at a location outside the formed weld seam, or to remove the formed weld seam, for example, removing the entire collector plate, replacing it with a new collector plate, and then reconnecting and performing rewelding, which greatly increases the material cost, labour cost, time cost, and total product cost.

### Summary of the Invention

The present invention discloses a collector plate for a battery pack, the collector plate comprising a welding part to be welded to an electrode terminal of a battery unit, wherein the welding part comprises a first side configured to come into contact with the electrode terminal during welding; and a second side opposite to the first side and provided with a positioning reference mark, which is configured as a positioning reference point for welding.

According to an embodiment of the present invention, the positioning reference mark is a recess that faces the electrode terminal from the second side of the welding part.

According to an embodiment of the present invention, the positioning reference mark is selected from the following shapes: circle, ring, ellipse, square, rectangle, diamond, or polygon.

According to an embodiment of the present invention, the positioning reference mark has a maximum outer diameter of 0.1 to 1.0 mm and a depth of 0.03 to 0.05 mm.

According to an embodiment of the present invention, the ratio of the depth of the recess to the plate thickness of the collector plate is 0.01 to 0.9.

According to an embodiment of the present invention, the positioning reference mark is formed by a stamping process or a laser marking process.

According to an embodiment of the present invention, the collector plate further comprises a substantially planar main body, wherein the welding part protrudes from the first side of the welding part toward the electrode terminal relative to the substantially planar main body of the collector plate, forming a protrusion.

According to an embodiment of the present invention, the positioning reference mark is located at an approximate centre of the protrusion.

According to an embodiment of the present invention, the welding part is parallel to the main body.

According to an embodiment of the present invention, a substantially conical connecting part is formed between the welding part and the main body.

According to an embodiment of the present invention, the positioning reference mark is a protrusion that protrudes from the second side of the welding part away from the electrode terminal.

The present invention discloses a battery pack comprising a housing; a battery unit enclosed by the housing and supported within the housing; and a collector plate for a battery pack as described above, wherein the collector plate is welded to the electrode terminals of the battery unit with the aid of the positioning reference mark to establish an electrical connection.

According to an embodiment of the present invention, the starting point of the welding is determined from the positioning reference mark or according to the positioning reference mark.

According to an embodiment of the present invention, the battery pack further comprises a collector plate support hermetically connected to the battery unit, the collector plate is installed in the collector plate support, and the positioning reference mark is exposed outside the collector plate support through an opening in the collector plate support.

According to an embodiment of the present invention, a welding part of the collector plate is located in an opening of the collector plate support, and the welding part protrudes from the main body part of the collector plate toward the surface of the collector plate support and is flush with the surface of the collector plate support, wherein the positioning reference mark is located at a substantially central position of the corresponding opening.

According to an embodiment of the present invention, the collector plate comprises a plurality of collector plates, which are electrically isolated from each other, and the collector plate support is insert-moulded onto the plurality of collector plates and maintains electrical isolation between the plurality of collector plates, wherein the positioning reference mark is located at a substantially central position of the corresponding opening.

According to an embodiment of the present invention, the collector plate and the collector plate support are integrally injection-moulded together, wherein the positioning reference mark is located at a substantially central position of the corresponding opening.

According to an embodiment of the present invention, the collector plate support is provided with a gap, into which the collector plate is inserted, wherein the positioning reference mark is located at a substantially central position of the corresponding opening.

By providing a positioning reference mark aligned with an electrode terminal of the corresponding battery unit at the welding part of the collector plate, the positioning accuracy of welding and the quality of the welding of a collector plate and an electrode terminal of a battery unit may be greatly improved, which improves the safety, accuracy, and efficiency of welding operations and avoids potential safety incidents in the circuit of the battery pack, thus increasing the product acceptance rate to reduce the material cost, labour cost, time cost, and total product cost; in addition, during the welding process and subsequent inspections, the welding quality may be directly inspected in a point-to-point manner for positioning reference marks, which greatly increases the speed, accuracy, and efficiency of inspection.

In addition, a positioning reference mark has a simple structure and is easy to process, which brings the various benefits above at a low cost; moreover, positioning reference marks are completed during the drawing design stage, which eliminates the above-mentioned shortcomings from the start.

### Brief Description of the Drawings

Fig. 1 shows a schematic perspective view of a battery pack according to an embodiment of the present invention.
Fig. 2 shows a partial exploded schematic perspective view of a battery pack according to an embodiment of the present invention, showing the battery support, upper housing, left housing and right housing.
Fig. 3 shows a partial exploded schematic perspective view of the battery support in Fig. 2 according to an embodiment of the present invention, showing components such as the battery unit, the battery support body, metal collector plate, collector plate support, and PCBA.
Fig. 4 shows an exploded schematic drawing of the collector plate and collector plate support, while Fig.4a and Fig. 4b respectively show a schematic front view and a sectional view of the collector plate assembly comprising a collector plate and a collector plate support according to an embodiment of the present invention.
Fig. 5 shows a partial sectional view of a battery pack according to an embodiment of the present invention, showing the positional and connection relationships between the various components of the battery pack.
Fig. 6 shows a perspective view of a collector plate with a positioning reference mark according to an embodiment of the present invention.

Reference signs: 1 - Battery pack; 10 - Battery plug; 11 - Battery unit; 12 - Negative electrode terminal; 13 - Positive electrode terminal; 15 - Slide groove; 16 - Sealing ring; 2 - Upper housing; 3 - Left housing; 4 - Right housing; 5 - Battery support body; 6 - Collector plate support; 61 - Opening; 7 - Collector plate; 73 - First collector plate; 74 - Second collector plate; 75 - Third collector plate; 71 - Welding part; 710 - Main body; 711 - Positioning reference mark; 712 - Connecting part; 72 - Pin; 8 - PCBA; 9 - Wireless module; 91 - Upper cover; 92 - Chipset; 93 - Lower cover; 94 - Closure member.

### Specific Embodiments

Preferred embodiments of the present invention are described in further detail below by referring to the accompanying drawings. The description below is exemplary, and does not limit the present invention; any other similar scenarios also fall within the scope of protection of the present invention.

Note that in the description of the present application, unless otherwise expressly specified or limited, terms like "connection" should be understood in a broad sense, which, for example, may be a fixed connection, a detachable connection, or an integrated connection; a mechanical connection or an electrical connection; a direct connection or a connection established through an intermediate medium. To a person skilled in the art, the specific meanings of such terms in the present application may be understood according to the particular circumstances. In addition, in the description of the present application, unless otherwise specified, the phrase "a plurality of" indicates two or more. It should also be noted that orientations or positional relationships indicated by terms such as "central", "longitudinal", "lateral", "upper", "lower", "front", "rear", "left", "right", "vertical", "horizontal", "top", "bottom", "inner", "outer", "axial", "radial", and "circumferential" are usually based on the orientations or positional relationships shown in the drawings, are only intended for convenience of describing the present application and brevity of description, rather than indicating or implying that the device or element referred to necessarily has a specific orientation or is constructed and operated in a specific orientation, and therefore should not be understood as a limitation of the present application.

Reference terms including "an embodiment", "certain embodiments", "example", "specific example", and "certain examples" as mentioned throughout this description mean that specific features, structures, materials, or characteristics described in conjunction with the embodiment or example are contained in at least one embodiment or example of the present application. In this specification, a schematic representation of said terms does not necessarily refer to the same embodiment or example. Furthermore, specific described features, structures, materials or characteristics may be suitably combined in any one or more embodiments or examples.

To allow those of ordinary skill in the art to easily understand the technical solutions of the present invention, the technical solutions of the present invention will be further described below in conjunction with the drawings, in which identical reference signs denote identical or similar elements.

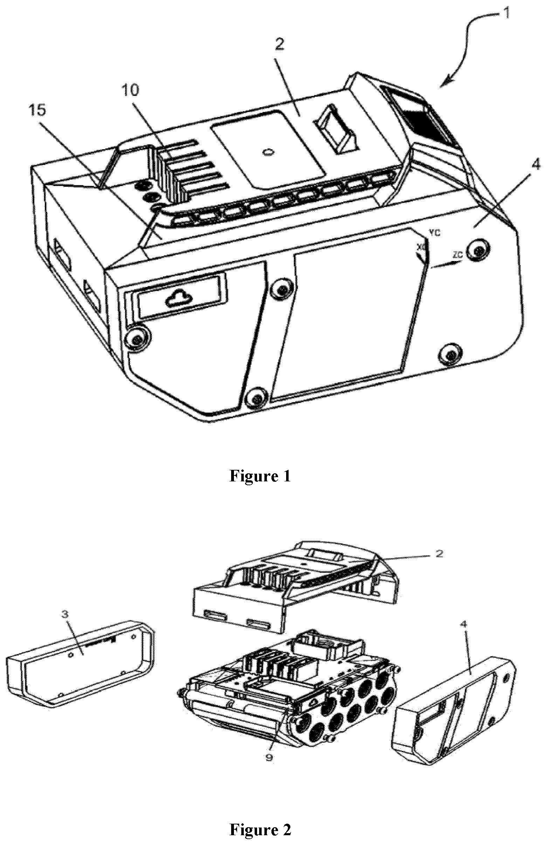

Fig. 1 shows a schematic perspective view of a battery pack 1 according to an embodiment of the present invention. Fig. 2 shows a partial exploded schematic perspective view of the battery pack 1 according to an embodiment of the present invention, showing a battery support and a housing enclosing the battery support. In a schematic embodiment, the housing comprises an upper housing 2, a left housing 3 and a right housing 4.

Refer to Fig. 1 and Fig. 2, which show a battery pack 1 according to one embodiment of the present invention, comprising a battery support and a housing enclosing the battery support. In an embodiment of the present invention, the housing may comprise an upper housing 2, a left housing 3 and a right housing 4. The upper housing 2, left housing 3 and right housing 4 are connected to the battery support by fasteners such as screws. It will be understood that the housing may be configured according to requirements, e.g., configured as an upper/lower housing structure.

In one embodiment of the present application, the battery pack is a rechargeable battery pack, preferably a lithium-ion battery pack. The battery pack 1 comprises at least one battery unit. In a preferred embodiment, the battery pack 1 comprises a total of 10 battery units 11, but the present application may indeed use a larger or smaller number of battery units. In an embodiment of the present invention, the 10 battery units are battery units with exactly the same parameters such as capacity, and are electrically connected in series/parallel to provide a more stable power supply. Indeed, it is also possible to use different numbers of battery units, connected in series, in parallel or in series/parallel, etc., in different ways, without departing from the scope of the present invention. In an embodiment of the present invention, the battery unit is a lithium-ion secondary battery unit. For example, in an embodiment of the present invention, graphite or hard carbon black or soft carbon black is used for a negative electrode of the lithium-ion secondary battery unit, and a lithium oxide such as LCO, NMC or NCA is used for a positive electrode, the lithium-ion secondary battery unit having a nominal voltage of 3.6 V. As examples, a positive electrode active substance used in the battery unit comprises a ternary material, an NCA material, lithium iron phosphate, lithium cobalt oxide or lithium manganese oxide; a negative electrode active substance used in the battery unit comprises lithium titanate, graphite or low-crystallinity carbon such as soft carbon black or hard carbon black.

As shown in Fig. 1, the top of the upper housing 2 has a battery plug 10 configured to electrically connect a battery pack to an electrical device or a charger. The electrical device may be an electric tool, so the battery pack may supply electric power to the electric tool. In an embodiment, the upper housing 2 is provided with slide grooves 15 at two sides of the charging plug 10 in the length direction thereof, the slide grooves facilitating electric tool insertion.

Fig. 2 shows a partial exploded view of a battery pack in one embodiment of the present invention. A battery support body 5 is used to accommodate multiple battery units (cells). In this embodiment, the battery support body 5 forms a bottom part of the housing, and could also be said to be formed as a lower housing itself. When battery units (not shown) have been accommodated in the battery support body 5, a collector plate (not shown) is used to connect the battery units together. The left and right housings 3 and 4 are installed on the left and right sides of the battery support body 5, thereby fixing the battery units in the battery pack. A PCBA is installed on the battery support body 5. As shown in the figures, the lower housing is mainly formed by the battery support body 5.

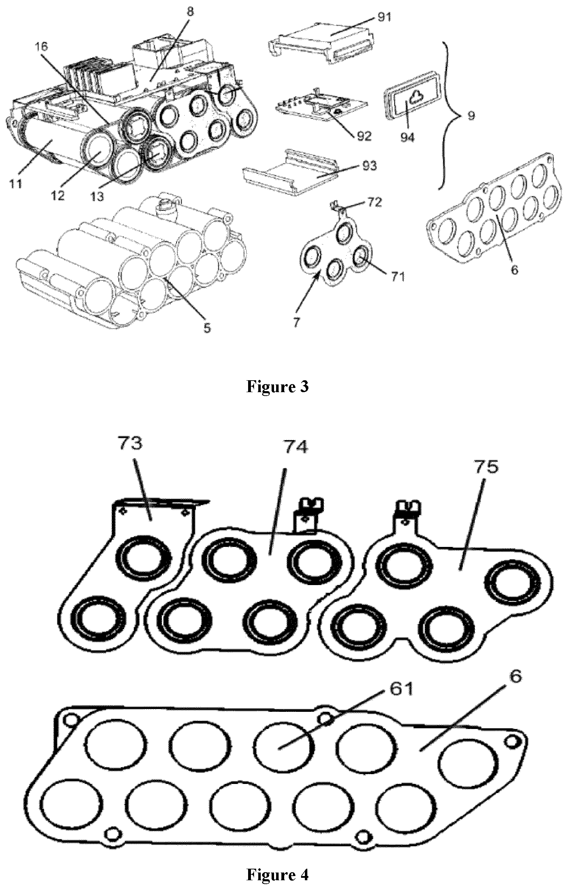

Fig. 3 shows a partial exploded schematic perspective view of the battery support in Fig. 2 according to an embodiment of the present invention, showing the battery unit 11, battery support body 5, metal collector plate 7, collector plate support 6, PCBA 8, and wireless module 9. Referring to Fig. 3, in one embodiment of the present invention, the battery support comprises a battery support body 5, a plurality of battery units 11 installed within the battery support body 5, a metal collector plate 7, a collector plate support 6, a PCBA 8, and a wireless module 9. In an embodiment of the present invention, the battery support body 5 is an integrally formed plastic member.

In embodiments of the present invention, the collector plate 7 is configured to electrically connect the electrode terminals of the battery units to each other and/or to connect the electrode terminals to the PCBA, wherein, preferably, the collector plate 7 is electrically connected to the electrode terminals, for example, the negative electrode terminal 12 or the positive electrode terminal 13, of the battery units 11 by laser welding. In an embodiment of the present invention, the collector plate 7 is inserted into the collector plate support 6. In an embodiment of the present invention, the collector plate support 6 is provided with a gap, and the collector plate 7 is inserted in the gap. In another preferred embodiment, the collector plate support 6 is insert-moulded onto the collector plate 7. The collector plate support 6 may be made of a material which is thermally conductive but not electrically conductive. Preferably, the collector plate support 6 is made of an elastic material, for example, thermoplastic elastomer, which has a certain elasticity to help form a seal between the battery support body and the left housing 3 and/or right housing 4 when the left housing 3 and/or right housing 4 is fixed to the battery support body, thereby preventing any liquid or dust from coming into contact with any electrode terminals of the battery unit.

Again referring to Fig. 3, the PCBA 8 is arranged at one end of the top of the battery support body 5, and the PCBA 8 has a width that is slightly smaller than that of the battery support body 5. Each collector plate 7 comprises protrusions (or welding parts) 71 protruding relative to its substantially planar main body and a pin 72 extending from the substantially planar main body. In an embodiment of the present invention, the collector plate support 6 comprises multiple openings 61; the openings 61 correspond to the protrusions 71, and the protrusions or welding parts are revealed or exposed through the openings in the insert-moulding process. Thus, the protrusions 71 are configured to be firmly electrically connected to the electrode terminals of the battery units 11, e.g., the negative electrode terminals 12 and/or positive electrode terminals 13, by a process such as laser welding. The pin 72 is configured to be electrically connected to the PCBA 8, so as to realize power supply management of the battery pack via the PCBA 8.

Again referring to Fig. 3, in one embodiment of the present invention, the battery support further comprises a wireless module 9. The wireless module may be a BLE-IoT module and/or NB-IoT module, or WIFI module. In embodiments of the present invention, the wireless module 9 comprises an upper cover 91, a chipset 92, and a lower cover 93. The upper cover 91 and lower cover 93 form an installation chamber, in which the chipset 92 may be installed. The wireless module 9 may be detachably installed on the PCBA 8, allowing the chipset 92 to be electrically connected to the PCBA through an interface (not shown) for communication.

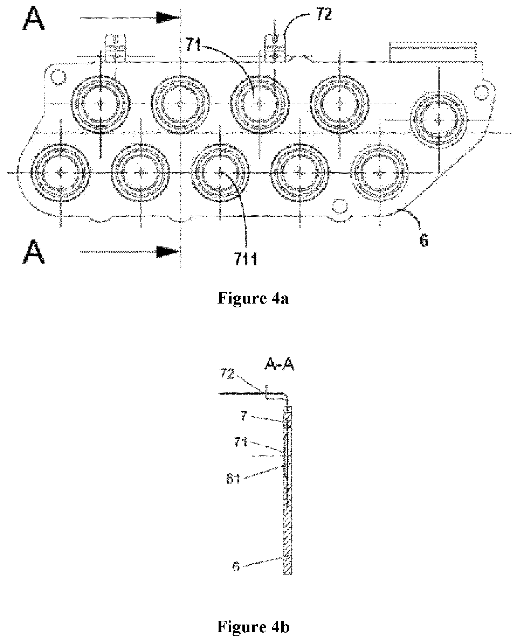

Again referring to Fig. 3 in conjunction with Fig. 4, Fig. 4a, and Fig. 4b, Fig. 4 shows an exploded schematic drawing of the collector plate and collector plate support, while Fig. 4a and Fig. 4b respectively show a schematic front view and a sectional view of a collector plate assembly comprising a collector plate and a collector plate support according to an embodiment of the present invention. Fig. 4 shows a schematic drawing of a collector plate assembly comprising the collector plate 7 and collector plate support 6 according to an embodiment of the present invention; the collector plate 7 may comprise at least one collector plate, for example it may comprise a first collector plate 73, a second collector plate 74 and a third collector plate 75. These collector plates 7 connect multiple battery units 11 (10 in this embodiment) together electrically, and the collector plates 7 are sealed well when installed between the battery support 5 and the collector plate support 6. The collector plates 7 have welding parts 71 configured to be welded to the terminals of the battery units; as shown in Fig. 4, the collector plate support 6 is provided with openings 61 corresponding to the welding parts of the collector plates, and the collector plates 7 are installed in the collector plate support 6 in such a way that the welding parts 71 are exposed by the collector plate support 6 through the openings 61.

In one embodiment of the present invention, the collector plate support 6 is made of an elastic sealing material. In an embodiment of the present invention, the collector plate support 6 is made of a thermally conductive material. In an embodiment of the present invention, the collector plate support is manufactured as a single piece, thus reducing the process assembly costs and manufacturing costs.

In one embodiment of the present invention, the collector plate support 6 is a single component made of a plastic material. The collector plate support is provided with a gap, in which the collector plate is inserted.

As shown in Fig. 4, Fig. 4a, and Fig. 4b, the collector plate support is provided with openings 61 corresponding to the welding parts of the collector plate, which allow the welding head or laser head (not shown) of the welding tool to weld the collector plate to the terminals of the battery unit through the openings 61. Those skilled in the art will understand that this may be achieved through various welding techniques.

In the drawings, the collector plate is connected to the terminals of 2 or 4 battery units. However, it will be understood that the collector plate may also connect the terminals of one or another number of battery units as required. The size of the collector plate may be configured appropriately according to the number of terminals of battery units to be connected. In Fig. 4a and Fig. 4b, the collector plate support is integrated, which means that the collector plate support accommodates a plurality of collector plates to help reduce installation procedures, thereby improving the production efficiency. However, it is also possible to provide a corresponding collector plate support for each collector plate. Since the housing can press the collector plate support against the battery support body 5, and the collector plate support may be formed of an elastic material, the housing and the battery support body 5 can clamp the collector plate support, so the collector plate support and the corresponding collector plate can still seal the terminals of the corresponding battery units.

Preferably, the collector plate has no gaps in its welding parts, so the welding parts can cover the terminals of the battery unit.

In one embodiment, the collector plate support has a gap, into which a collector plate may be inserted, allowing the welding parts of the collector plate to be exposed from the openings 61 of the collector plate support. As shown in the figures, the welding parts of the collector plate are formed by protrusions 71, which protrude from a body part of the collector plate and are substantially flush with a surface of the collector plate support. A collector plate assembly is thereby formed. During installation, the battery unit is first installed in the battery support body, then the welding parts of the collector plate are welded to the terminals of the battery unit, and then the housing is installed deviating from the collector plate support, thus sealing the terminals of the battery unit.

In another embodiment, the collector plate and the collector plate support are injection-moulded integrally. For example, the collector plate is placed in a mould and then a molten elastomer material (for example, a thermoplastic elastomer TPE, TPR, TPU, TPO, or TPV) is injected therein to mould the collector plate in the elastomer material, resulting in the collector plate assembly as shown in Fig. 4a and Fig. 4b. Preferably, the elastic material is a thermally conductive material.

In Fig. 4b, a sectional view of the collector plate assembly 6 is also shown, where the collector plate 7 is injection-moulded onto the collector plate support 6. The welding parts 71 of the collector plate 7 are located in the openings 61 of the collector plate support 6, and the welding parts 71 protrude from the main body part of the collector plate 7 toward the surface of the collector plate support 6 and are flush with the surface of the collector plate support 6, forming a whole to facilitate sealing of the battery unit.

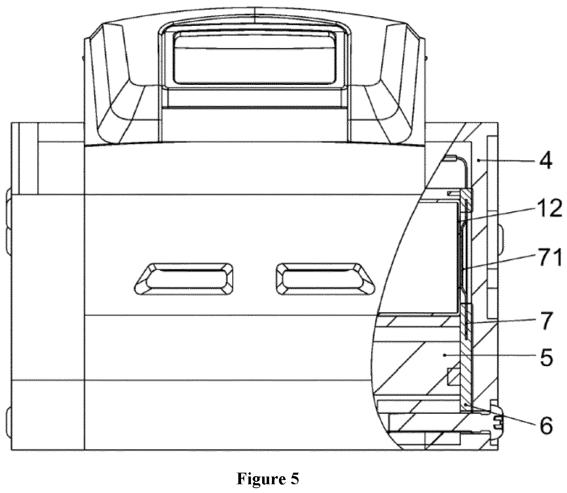

In the embodiment shown in Fig. 5, since the collector plate assembly substantially covers the open end (namely side face) of the battery support body 5, the left and right housings can simply press the periphery of the collector plate support against the battery support body to achieve a good sealing effect. In an embodiment of the present invention, the first collector plate 73, second collector plate 74 and third collector plate 75 are spaced apart so as to be electrically isolated, and the collector plate support 6 is insert-moulded onto the first collector plate 73, the second collector plate 74 and the third collector plate 75 and keeps these collector plates electrically isolated.

Fig. 5 is a partial sectional view of an embodiment of the present invention, showing a portion of the assembled battery pack. In Fig. 5, the negative electrode terminal 12 of the battery unit 11 is welded to the welding part 71 of the collector plate 7 to form an electrical connection. The collector plate 7 is inserted in the collector plate support 6 in such a way that the welding part 71 thereof is exposed by the collector plate support 6. A sealing element, for example, the sealing ring 16 shown in Fig. 3, is provided between the battery support body 5 and the collector plate support 6 to completely seal the battery unit therein. The housing (e.g., the right housing 4) is attached to the battery support body 5 by means of fasteners, with the collector plate support 6 disposed between the housing and the battery support body 5.

During installation, the battery unit 11 is first installed in the battery support body 5, then the welding part 71 of the collector plate 7 of the collector plate assembly is welded to a terminal (for example, the negative electrode terminal 12 in Fig. 5) of the battery unit 11, and then the housing 4 is installed deviating from the collector plate support 6. The sealing element is disposed between the battery support body 5 and the collector plate support 6, and the collector plate assembly is itself a leakproof integral structure, so the battery unit 11 disposed in the battery support body 5 is protected to achieve a good sealing result.

The structural compositions of a battery pack have been briefly described above in an exemplary manner to help understand the present invention, and the following will focus on describing the collector plate according to an embodiment of the present invention. It should be pointed out that the structural compositions (such as the battery support body 5, collector plate support 6, and wireless module 9) of the battery pack described above are only exemplary and unrestrictive. For example, the battery support body 5 may not be included, or a battery support in any other structure or form may be included, as long as the battery units may be kept in the battery pack according to a predetermined configuration and arrangement. Similarly, the collector plate support 6 may not be included, or a collector plate support of any other structure or in any other form may be included, as long as the collector plate 7 may be connected to the battery unit and battery pack. For example, it may comprise only a collector plate 7, which is electrically connected to a plurality of battery units. Indeed, the collector plate 7 may be electrically connected to the battery unit through various connection methods, such as welding, laser welding, resistance welding, and any other type of welding.

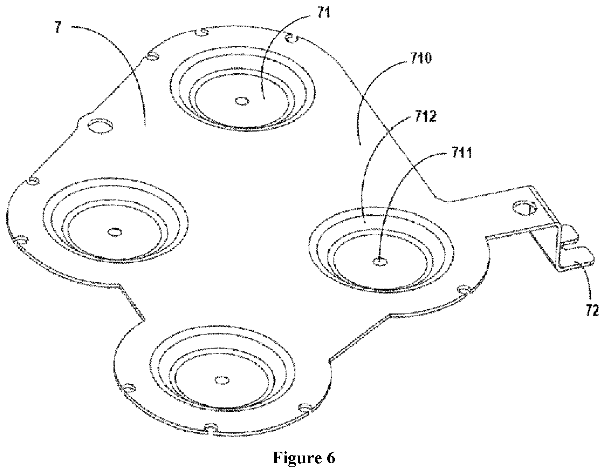

As mentioned earlier, problems with positioning and alignment, as well as problems with welding reference points, occur when a collector plate is welded to a terminal of a battery unit, so collector plates of the present invention will be described below by taking a collector plate as an example, which can solve at least some of the aforementioned problems. Referring to Fig. 6, a collector plate 7 as described above is shown, the collector plate 7 comprising protrusions (or welding parts) 71 protruding relative to its substantially planar main body 710 and a pin 72 extending from the substantially planar main body 710. The protrusions 71, serving as welding parts, are firmly electrically connected to the electrode terminals, for example, the negative electrode terminal 12 and/or the positive electrode terminal 13, of the battery unit 11 by a process such as laser welding. The pin 72 is configured to be electrically connected to the PCBA 8, so as to realize power supply management of the battery pack via the PCBA 8. A connecting part 712 is formed between the protrusion 71 and the main body 710, the connecting part 712 being preferably formed into a conical shape, for example, a substantially conical shape. The protrusion (or welding part) 71 is parallel to the main body 710. Refer to Fig. 4a and Fig. 6, which show that one or more positioning holes are arranged on the periphery of the collector plate 7, and corresponding to these positioning holes, positioning columns are arranged on the battery pack housing. As mentioned earlier, when a collector plate is placed, the positioning hole of the collector plate is aligned with the positioning column, and the positioning column is inserted into the positioning hole to fix it in place, thereby fixedly connecting the collector plate to the battery pack housing; in addition, the welding parts of the collector plate are naturally aligned with the terminals of the battery unit on a one-to-one basis. A positioning reference mark 711 is arranged inside the protrusion 71, and the positioning reference mark 711 is automatically aligned with a terminal of the battery unit, preferably with the centre of a terminal of the battery unit, when the collector plate is placed in position on the battery unit, so that welding may be performed around the positioning reference mark 711 (that is, centring on the positioning reference mark 711) to weld the welding part 71 and thus weld the collector plate 7 to the terminals of the battery unit 11. From the drawings, it is clear that each protrusion 71 corresponds to one electrode terminal (for example, the negative electrode terminal 12 and/or positive electrode terminal 13) of one battery unit 11, so one positioning reference mark 711 within each protrusion 71 corresponds to one corresponding terminal of one battery unit 11, thereby forming a one-to-one correspondence between each positioning reference mark 711 and each electrode terminal, so that precisely positioned welding spots may be formed between the electrode terminals and the welding positions of the collector plate 7 (such as the protrusions 71) in a point-to-point manner (that is, by point-by-point correspondence), thus forming a clearly defined current path. It is thus clear that the positioning reference mark 711 has a dual function: in one aspect, the positioning reference mark 711, since it is formed as a whole within a protrusion (or welding part) 71, is automatically aligned with a terminal as the collector plate is aligned with the terminal; in another aspect, the positioning reference mark 711 serves as a position identifier and positioning reference, and the positioning reference mark 711 will be used as the starting point or reference point for welding in the subsequent welding process, wherein, for example, a weld seam is formed centring on the positioning reference mark 711, and welding quality inspection and measurement are carried out accordingly.

It should be pointed out that while the welding parts of the collector plate have been described in the form of protrusions above and in the drawings, it is only an example and unrestrictive, and the welding parts or welding positions of the collector plate may be planar, which means that the collector plate 7 as a whole is planar without any protrusions or recesses, the positioning reference mark being located at any position in these planar welding parts, preferably at the centre of these welding parts. Regardless of whether the welding part is in the form of a protrusion or is planar, the ideal situation is that the positioning reference mark is located at the centre position, which can improve the accuracy of alignment between the collector plate and an electrode terminal, and, since the welding is carried out around the positioning reference mark, it improves the uniform distribution of multiple welds formed at a welding position; indeed, due to manufacturing tolerances and assembly errors, when the collector plate is installed on the battery unit, the positioning reference mark may not be accurately aligned with the centre of an electrode terminal of the battery unit, therefore, the positioning reference mark may be located near the central position of the welding part, that is, aligned near the centre of the electrode terminal of the battery unit, wherein, indeed, this position deviation is within the design threshold and allowable difference range, without affecting the welding accuracy. Moreover, welding may be carried out concentrically around the positioning reference mark 711, or may be carried out deviating relative to the mark 711 instead of concentrically, wherein, in other words, as long as the mark 711 is used as the positioning reference and welding is carried out near the mark 711, accurate positioning and high-quality welding may be achieved, which falls within the scope of protection of the present invention.

The positioning reference mark 711 is designed in advance, which means that during the engineering drawing design stage, according to the position and arrangement of the battery unit 11 and those of its electrode terminals, the corresponding positions of the collector plate, the welding part of the collector plate, and the positioning reference mark in the welding part are designed, so, when the collector plate is manufactured and assembled with the battery unit, the positioning reference mark is automatically aligned with the electrode terminals of the battery unit, and once the assembly is completed, the collector plate may be directly welded to the electrode terminals centring on the positioning reference mark, forming high-precision welds and high-quality current paths; in addition, it is convenient to check the connection weight of the circuit during and/or after welding, for example, by measuring and checking the positioning reference marks point by point. Therefore, compared with conventional techniques, the use of positioning reference marks may greatly improve the positioning accuracy of welding and the quality of welding between the collector plate and the electrode terminals of the battery unit, which improves the safety, accuracy, and efficiency of welding operations while avoiding potential safety incidents in the circuit of the battery pack.

Refer to Fig. 4a to Fig. 6, which describe the positioning reference mark 711 by taking, for example, the welding part 71 as being a protrusion. One side (or the inner side) of the protrusion 71 of the collector plate 7 is in contact with the electrode terminals of the battery unit, and the opposite side (or the outer side) is provided with a positioning reference mark 711, wherein, when the collector plate is placed in position and pressed against the battery unit, the positioning reference mark 711 is aligned with the electrode terminals of the corresponding battery unit. During manual welding, an operator can see the positioning reference mark 711 from the outside and thus conveniently carry out welding operations around the positioning reference mark 711. Alternatively and/or in combination, a welding machine (for example, a laser welding machine) may be used to automatically perform welding operations, the welding machine comprising a visual inspection system and a welding head, wherein, when the visual inspection system detects the positioning reference mark 711, the welding head uses the positioning reference mark 711 as the starting point or reference point for welding, wherein, for example, the welding head performs welding around the positioning reference mark 711 along a predetermined welding path, forming a predetermined welding pattern around the positioning reference mark 711. During this welding process, a sensor of the welding machine can sense signals, such as metal vapour, laser reflection, and molten pool thermal radiation, generated during the welding process, and convert these radiation light signals into electrical signals for analysis, thereby obtaining quality information and defect information about a weld seam. The positioning reference mark 711 is located at the centre or approximate centre of the protrusion 71, and is recessed from the surface of the protrusion 71 to form a circular recess, which means that the positioning reference mark 711 is recessed from the outside of the welding part 71 toward the electrode terminal side to form a recess. The maximum outer diameter (namely diameter) of the circular recess may range from 0.1 to 2.0 mm, for example, from 0.1 to 1.0 mm, wherein, for example, the maximum outer diameter is 0.1 mm, 0.2 mm, 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm, 2.0 mm or any other larger or smaller dimension range and value; the depth of the circular recess may range from 0.01 to 0.5 mm, 0.03 to 0.05 mm, 0.03 to 0.1 mm, 0.03 to 0.15 mm, or 0.03 to 0.5 mm, for example, 0.01 mm, 0.02 mm, 0.03 mm, 0.04 mm, 0.05 mm, 0.06 mm, 0.07 mm, 0.08 mm, 0.09 mm, 0.1 mm, 0.15 mm, 0.2 mm, 0.25 mm, 0.3 mm, 0.35 mm, 0.4 mm, 0.45 mm, 0.5 mm, or any other larger or smaller dimension range and value. The dimensions (including the depth and maximum outer diameter) of the circular recess should be designed to be within a certain range, because if its dimensions are too small, it is not easy to identify by appearance, while increasing its dimensions can make it more identifiable by appearance, so that an operator or welding machine can easily identify the position and shape of the circular recess, but excessive dimensions will lead to an increase in manufacturing time, which is unnecessary; therefore, the dimensions of the circular recess should be rationally designed so that the recess is easy to identify and process.

In addition, the plate thickness of the collector plate 7 may range from 0.1 mm to 1.0 mm, for example, in the range of 0.1 to 0.5 mm, such as 0.1 mm, 0.2 mm, 0.3 mm, 0.4 mm, 0.5 mm, 0.6 mm, 0.7 mm, 0.8 mm, 0.9 mm, 1.0 mm or any other larger or smaller dimension range and value. Therefore, the ratio of the depth of the recess to the plate thickness of the collector plate may be 0.01 to 0.9, such as 0.1 to 0.3, 0.1 to 0.2, 0.1 to 0.17, 0.1, 0.11, 0.12, 0.13, 0.14, 0.15, 0.16, 0.17, 0.18, 0.19, 0.2, 0.25, 0.3, 0.4, 0.5 or any other larger or smaller ratio range and value.

In addition, the protrusion (or welding part) 71 may be of various shapes, such as a circle, ellipse, triangle, rectangle, square, diamond, pentagon, or any other regular and irregular polygon. The maximum outer diameter of the protrusion (or welding part) 71 may be from 6 mm to 12 mm, for example, within the range of 7 to 11 mm, such as 6 mm, 7 mm, 8 mm, 9 mm, 10 mm, 11 mm, 12 mm, or any other larger or smaller dimension range and value. Therefore, the ratio of the maximum outer diameter of the recess to the maximum outer diameter of the protrusion (or welding part) 71 may be 0.01 to 0.4, such as 0.08 to 0.17, 0.17 to 0.3, 0.1 to 0.4, 0.1, 0.11, 0.12, 0.13, 0.14, 0.15, 0.16, 0.17, 0.18, 0.19, 0.2, 0.25, 0.3, 0.4, or any other larger or smaller ratio range and value.

By selecting appropriate ranges of the two ratios mentioned above, the positioning reference mark 711 may be made more identifiable relative to the collector plate 7 and the welding part 71, so that an operator or a visual inspection system of a welding machine can easily see or detect the positioning reference mark 711, while the processing time of the positioning reference mark 711 is taken into account, which means that the positioning reference mark 711 is easy to identify and process.

After a circular recess is formed, an operator or welding machine can perform welding operations around the circular recess. As mentioned above, welding may be carried out concentrically centring on the circular recess, wherein, for example, a plurality of circular weld seams may be formed around the recess, and the innermost weld seam may be located near the periphery of the circular recess, wherein, for example, the diameter of the innermost weld seam may range from 1 mm to 2 mm, for example, 1 mm to 1.2 mm, while the diameter of the outermost weld seam may range from 3 mm to 4 mm, for example, 3 mm to 3.5 mm. The above weld seam sizes are only examples, which are unrestrictive, and an operator or welding machine can choose a welding range rationally according to actual needs and the sizes of the electrode terminals of the battery unit, wherein, for example, the outermost weld seam is preferably within the size range of the electrode terminals.

The circular recess may be formed by various suitable manufacturing processes, such as stamping or laser marking; when processed using stamping technology, the circular recess may be formed together with the collector plate in the same stamping process step, which reduces process steps; alternatively, a laser marking process may be used to form a circular recess at a suitable position on the welding part 71.

While the drawings show that the positioning reference mark 711 is circular, this is only an example and the present invention is not limited thereto, wherein the positioning reference mark 711 may be of any other shape, and as long as it serves a marking function, it falls within the scope of protection of the present invention; for example, the positioning reference mark 711 may be a circle, ellipse, triangle, rectangle, square, diamond, pentagon, or any other regular and irregular polygon, and its dimensions are designed accordingly so that it is easy to identify and process, all of which fall within the scope of protection of the present invention. For example, by taking a positioning reference mark being a circular recess as an example, its dimensions have been described above, wherein the maximum outer diameter (namely diameter) of the circular recess may be in the range of 0.1 to 2.0 mm, such as 0.1 to 1.0 mm, and the depth thereof may be in the range of 0.01 to 0.5 mm, such as 0.03 to 0.05 mm, 0.03 to 0.1 mm, 0.03 to 0.15 mm, and 0.03 to 0.5 mm; in the case where the positioning reference mark is a noncircular recess, the preceding descriptions regarding the dimensions (including depth and maximum outer diameter) of the circular recess, the ratio of the depth of the circular recess to the plate thickness of the collector plate, and the ratio of the maximum outer diameter of the circular recess to the maximum outer diameter of the protrusion (or welding part) 71 also apply, and thus no similar details will be given again herein. For example, the maximum outer diameter of the positioning reference mark may be in the range of 0.1 to 2.0 mm, such as 0.1 to 1.0 mm, and the depth thereof may be in the range of 0.01 to 0.5 mm, such as 0.03 to 0.05 mm, 0.03 to 0.1 mm, 0.03 to 0.15 mm, and 0.03 to 0.5 mm.

In addition, while the drawings show that the positioning reference mark 711 is a recess located within the welding part 71, the present invention is not limited thereto, wherein the positioning reference mark 711 may also be a protrusion that protrudes from the outer side of the welding part 71 away from the electrode terminal, and may be formed together with the collector plate in the same stamping process step, for example.

It should be pointed out that the application of these positioning reference marks, rather than being limited to the collector plates mentioned herein, is also applicable to collector bars, which means that it is applicable to collector plates and collector bars of various shapes and sizes.

As mentioned above and referring to Fig. 3 to Fig. 5, when a collector plate 7 provided with a positioning reference mark 711 is installed in the collector plate support 6, the welding part 71 is exposed from the collector plate support 6 through the openings 61 in the collector plate support 6, and the positioning reference mark 711 is also exposed to the outside of the collector plate support 6 through the openings 61, which means that the positioning reference mark 711 is visible from the outside. Since the openings 61 correspond to the welding parts 71 (namely the protrusions 71) and the positioning reference mark 711 is located at the centre or approximate centre of the protrusion 71, the positioning reference mark 711 is also located at a substantially central position of the opening 61.

As shown in the drawings, a plurality of collector plates separated from each other are provided, each of which can connect various numbers of electrode terminals of battery units, and positioning reference marks, the number of which corresponds to the number of electrode terminals, are arranged on each collector plate, thereby providing positioning reference marks according to the number and arrangement of collector plates.

As mentioned above, by providing a positioning reference mark aligned with an electrode terminal of the corresponding battery unit at the welding part of the collector plate, the positioning accuracy of welding and the quality of the welding of a collector plate and an electrode terminal of a battery unit may be greatly improved, which improves the safety, accuracy, and efficiency of welding operations and avoids potential safety incidents in the circuit of the battery pack, thus increasing the product acceptance rate to reduce the material cost, labour cost, time cost, and total product cost; in addition, during the welding process and subsequent inspections, the welding quality may be directly inspected in a point-to-point manner for positioning reference marks, which greatly increases the speed, accuracy, and efficiency of inspection.

In addition, a positioning reference mark has a simple structure and is easy to process, which brings the various benefits above at a low cost; moreover, positioning reference marks are completed during the drawing design stage, which eliminates the above-mentioned shortcomings from the start.

Although particular embodiments of the present invention have been described above, those skilled in the art should understand that these are merely exemplary explanations, and the scope of protection of the present invention is defined by the attached claims. Those skilled in the art could combine, change or modify these embodiments in various ways without departing from the principle and substance of the present invention, but all such combinations, changes and modifications fall within the scope of protection of the present invention.

## Claims

1. Collector plate (7) for a battery pack, the collector plate comprising a welding part (71) to be welded to an electrode terminal of a battery unit (11), **characterized in that** the welding part (71) comprises
a first side configured to come into contact with the electrode terminal during welding; a second side opposite to the first side and provided with a positioning reference mark (711), which is configured as a positioning reference point for welding.

2. Collector plate (7) for a battery pack according to Claim 1, **characterized in that** the positioning reference mark (711) is a recess that faces the electrode terminal from the second side of the welding part (71).

3. Collector plate (7) for a battery pack according to Claim 2, **characterized in that** the positioning reference mark (711) is selected from the following shapes: circle, ring, ellipse, square, rectangle, diamond, or polygon.

4. Collector plate (7) for a battery pack according to Claim 3, **characterized in that** the positioning reference mark (711) has a maximum outer diameter of 0.1 to 1.0 mm and a depth of 0.03 to 0.05 mm.

5. Collector plate (7) for a battery pack according to Claim 2, **characterized in that** the ratio of the depth of the recess to the plate thickness of the collector plate (7) is 0.01 to 0.9.

6. Collector plate (7) for a battery pack according to Claim 2, **characterized in that** the positioning reference mark (711) is formed by a stamping process or a laser marking process.

7. Collector plate (7) for a battery pack according to Claim 1, **characterized in that** the collector plate (7) further comprises a substantially planar main body (710), wherein the welding part (71) protrudes from the first side of the welding part (71) toward the electrode terminal relative to the substantially planar main body (710) of the collector plate (7), forming a protrusion.

8. Collector plate (7) for a battery pack according to Claim 7, **characterized in that** the positioning reference mark (711) is located at an approximate centre of the protrusion, and preferably, the positioning reference mark (711) is a protrusion that protrudes from the second side of the welding part (71) away from the electrode terminal.

9. Collector plate (7) for a battery pack according to Claim 7, **characterized in that** the welding part (71) is parallel to the main body (710), and preferably, a substantially conical connecting part (712) is formed between the welding part (71) and the main body (710).

10. Battery pack (1) comprising:
a housing;
a battery unit (11) enclosed by the housing and supported within the housing;
a collector plate (7) for a battery pack according to any one of Claims 1-9, **characterized in that** the collector plate (7) is welded to the electrode terminals of the battery unit (11) with the aid of the positioning reference mark (711) to establish an electrical connection, and preferably, the starting point of the welding is determined from the positioning reference mark (711) or according to the positioning reference mark (711).

11. Battery pack (1) according to Claim 10, further comprising a collector plate support (6), **characterized in that** the collector plate support (6) is hermetically connected to the battery unit (11), the collector plate (7) is installed in the collector plate support (6), and the positioning reference mark (711) is exposed outside the collector plate support (6) through an opening (61) in the collector plate support (6).

12. Battery pack (1) according to Claim 11, **characterized in that** a welding part (71) of the collector plate (7) is located in an opening (61) of the collector plate support (6), and the welding part (71) protrudes from the main body part of the collector plate (7) toward the surface of the collector plate support (6) and is flush with the surface of the collector plate support (6), wherein the positioning reference mark (711) is located at a substantially central position of the corresponding opening (61).

13. Battery pack (1) according to Claim 11, **characterized in that** the collector plate (7) comprises a plurality of collector plates, which are electrically isolated from each other, and the collector plate support (6) is insert-moulded onto the plurality of collector plates and maintains electrical isolation between the plurality of collector plates, wherein the positioning reference mark (711) is located at a substantially central position of the corresponding opening (61).

14. Battery pack (1) according to Claim 11, **characterized in that** the collector plate (7) and the collector plate support (6) are integrally injection-moulded together, wherein the positioning reference mark (711) is located at a substantially central position of the corresponding opening (61).

15. Battery pack (1) according to Claim 11, **characterized in that** the collector plate support (6) is provided with a gap, into which the collector plate (7) is inserted, wherein the positioning reference mark (711) is located at a substantially central position of the corresponding opening (61).
